# EUROPEAN PATENT SPECIFICATION

(11) **EP 4 305 953 B1**
(45) Date of publication and mention of the grant of the patent: **21.01.2026**
(21) Application number: 23179991.7
(22) Date of filing: 19.06.2023
(51) Int. Cl.: A01F 12/28, A01F 15/04

(54) **FORAGE HARVESTER**
FELDHÄCKSLER
RÉCOLTEUSE-HACHEUSE

(30) Priority: 13.07.2022 GB 202210284
(43) Date of publication of application: 17.01.2024
(73) Proprietor: AGCO International GmbH, 8212 Neuhausen am Rheinfall (CH)
(72) Inventor: DREER, Constantin, 87616 Marktoberdorf (DE)
(74) Representative: AGCO Intellectual Property Department

(56) References cited:
- EP-A2- 2 666 348
- EP-B1- 2 742 793
- DE-A1- 10 021 663
- DE-B3- 102011 084 443
- US-A1- 2021 092 903
- US-B1- 6 290 599
- US-B2- 8 701 376

## Description

### FIELD

The present invention relates to an improved forage harvester, and, in particular, to a cracker unit for a forage harvester.

### BACKGROUND

It is known to provide forage harvesters with a cracker unit. The cracker unit includes opposing cracker rollers through which harvested crop is fed. The harvested crop is first fed though a chopper unit and then into the cracker unit where it is squeezed and crushed between the opposing cracker rollers before being fed to a discharge spout.

The cracker unit includes a first cracker roller, that is free to rotate, and can be driven about its longitudinal axis and is supported in bearings on a first frame element. The first cracker roller is located toward a first end of the cracker unit. A second cracker roller is provided. In a known construction, the second cracker roller is driven and supported in bearings on a second frame element. The second frame element is located to a second end of the cracker unit and can be linearly adjusted with respect to the first frame in order to adjust a spacing between the first and second cracker rollers. Together the first and second cracker rollers provide an elongate opening between left and right hand sides of the cracker unit through which harvested crop that is to be processed can be conveyed. The first frame element serves as a base of the cracker unit. Additional first and second covering elements are secured to the first frame element to form an upper housing of the cracker unit through which processed crop is directed towards the discharge spout.

A pre-loading arrangement is provided on the second frame element such that the second cracker roller is preloaded towards the first cracker roller. Further, the spacing between the cracker rollers is adjustable by means of a linear adjustment apparatus in which the second frame element sits on a slide to adjust the position of the axis of rotation of the moveable second cracker roller with respect to that of the first cracker roller.

An example assembly is shown in US2021/092903A1, where holder elements of a conditioning roller assembly are connected by a hinge and spring arrangement for pre-tensioning the rollers.

The present invention provides an alternate mounting arrangement that enables adjustment of the moveable cracker roller with respect to its fixed counterpart. Other advantages of the present invention will be apparent from the description below.

### BRIEF SUMMARY

The invention provides a forage harvester cracker according to claim 1. Preferred embodiments are provided in the dependent claims. J Z

### BRIEF DESCRIPTION OF THE DRAWINGS

The invention will now be described, by way of example only, with reference to the accompanying drawings, in which:
FIG 1 shows a schematic side view of a forage harvester;
FIG 2 shows a perspective view of a first embodiment of a cracker unit according to the present invention for use with a forage harvester;
FIG 3 shows a perspective view of a cracker unit for use with a forage harvester similar to that of FIG 2 in which elements of the cracker unit have been omitted;
FIG 4 shows a first side view of the cracker unit of FIG 3 showing elements of a cracker unit in accordance with the present invention;
FIG 5 shows a sectional view of the elements shown in FIG 4;
FIG 6 shows a detailed view of elements shown in FIG 4;
FIG 7 shows an opposite side view of the forage harvester cracker unit in accordance with the present invention to that shown in FIG 4; and
FIG 8 shows a side view of a second embodiment of a cracker unit according to the present invention for use with a forage harvester.

### DETAILED DESCRIPTION

The invention will now be described in the following detailed description with reference to the drawings, wherein preferred embodiments are described in detail to enable practice of the invention. Although the invention is described with reference to these specific preferred embodiments, it will be understood that the invention is not limited to these preferred

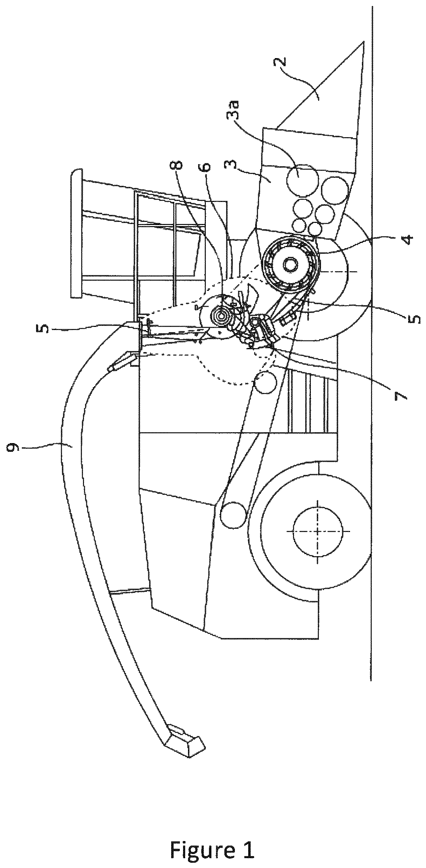

Figure 1 shows a forage harvester provided with a front attachment 2 such as a header which contains cutting equipment for cutting and harvesting a crop. The cut crop is fed through a series of compression rolls 3a in a compression roller housing 3 to a chopper drum 4 where the crop is chopped into smaller pieces. The chopped crop passes through a duct 5 and is optionally directed into a cracker unit 6 where the crop is further crushed and threshed. The harvested crop is then blown upwards along a duct 5 by an accelerator 8 and exits through a spout 9.

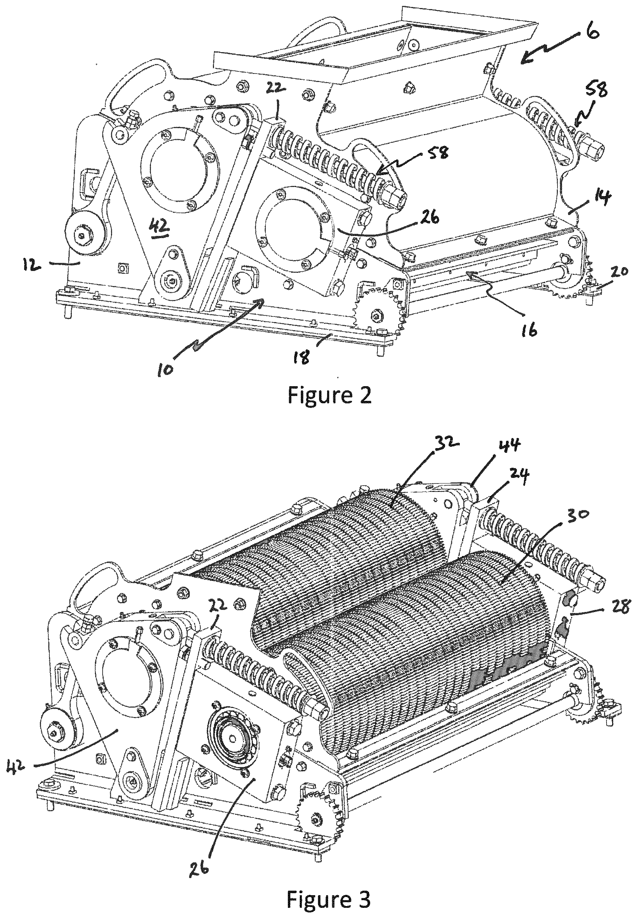

Figures 2 and 3 show perspective views of a first embodiment of a cracker unit 6 for use in a forage harvester. A base frame 10 of the cracker unit 6 comprises first and second side panels 12,14 and connecting elements 16 extending between the first and second side panels 12,14. Each side panel 12,14 is provided with a outwardly extending lower flange 18, 20 and a post 22,24 secured to the side panel 12,16 and its lower flange 18,20 by any suitable means, for example by welding of the post 22,24 to the side panel 12,14. The posts 22,24 are arranged parallel to one another and each post 22,24 conveniently extends at an angle to the adjacent lower flange 18,20. In use the lower flanges are used to secure the cracker unit in position on a frame of the forage harvester 2.

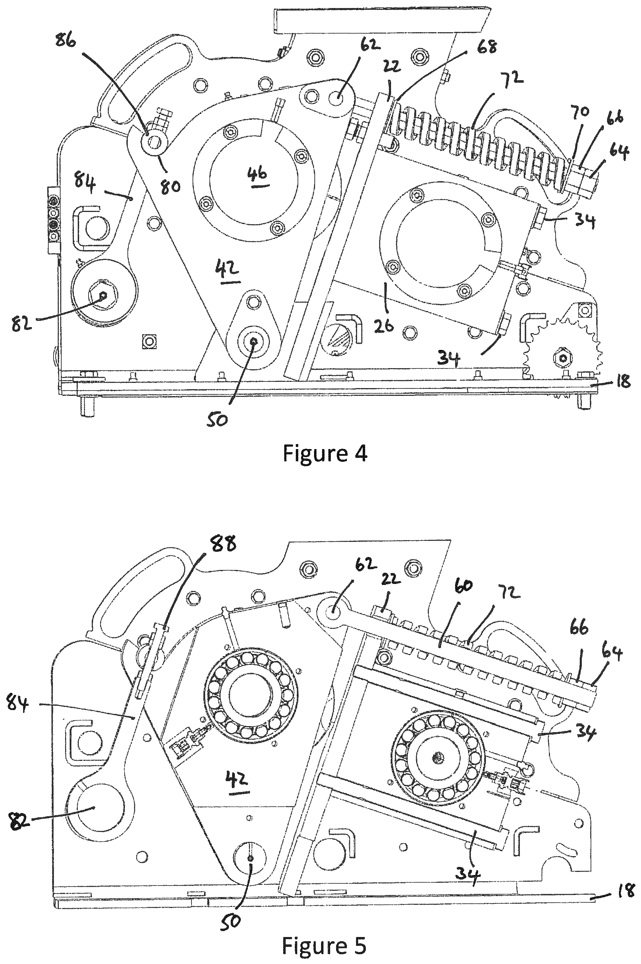

Corresponding first mounting blocks 26,28 are secured to a first side of each of the posts 22,24. The first mounting blocks 26,28 each house a suitable bearing for supporting first and second ends of a first cracker roller 30. In the illustrated embodiment, roller bearings are provided. The first mounting blocks 26,28 may be secured to the posts in any suitable manner, for example by bolts 34 (see FIG 5).

On a second side of each of the posts 22,24 a secondary frame is provided. In the illustrated embodiment of Figures 2 to 7, the secondary frame comprises first and second end elements 42,44 each of generally triangular form. In use each of the first and second end elements 42,44 of the secondary frame is located adjacent to a respective side wall 12,14 and is located within a width defined by outer edges of the side flanges 18,20.

Each of the first and second end elements 42,44 incorporate corresponding second mounting blocks 46,48. The second mounting blocks 46,48 each house a suitable bearing for supporting first and second ends of a second cracker roller 32. In the illustrated embodiment, roller bearings are provided.

The first and second end elements 42,44 of the secondary frame are also connected by an axle 50 extending through a lower end of each of the first and second end elements 42,44. The axle 50 extends though suitable openings in the first and second side walls 12,14 of the base frame 10. The axle 50 allows the secondary frame to pivot with respect to the base frame 10 about a central axis of the axle 50.

An upper end of each first and second end element 42,44 adjacent a post 22,24 is provided with a mounting point. At each side of the cracker unit 6 a biasing arrangement 58 is secured to the mounting point. In the illustrated first embodiment of Figures 2 to 7, the biasing arrangement 58 comprises a central elongate shank member 60 provided at a first end with a threaded head and at a second end with an opening. The second end of the elongate shank member 60 is secured to the mounting point by a pivot pin 62. A shank of the elongate member passes through an opening provided in the upper ends of each of the posts 22,24. The threaded head is conveniently provided with by first and second nuts 64,66. Before the first and second nuts 64,66 are secured in place a first washer 68, a spring element 72 and a second washer 70 are located about the shank of the elongate shank member 60. In use, each spring element 72 is under compression and so will seek to draw the respective first and second end elements 42,44 of the secondary frame towards the corresponding post 22,24, that will (with reference to Figures 2 to 6) cause the secondary frame to rotate clockwise about the axle 50.

An upper end of each of the first and second end elements 42,44 of the secondary frame spaced from the posts 22,24 is provided with a recessed portion 80.

The base frame 10 is provided at a second end with corresponding openings in the first and second side panels 12,14. A drive shaft 82 extends through the openings. Ends of the drive shaft 82 serve as mountings for corresponding pivot levers 84 provided to each side of the cracker unit 6. Lower ends of each pivot lever are mounted on an eccentric bearing.

The upper ends of each pivot lever 84 are provided with pins 86 adapted to be seated within the recessed portions 80 of the corresponding first and second end elements 42,44. As may be seen from Figure 5, the pins 86 are conveniently retained by threaded elements 88 secured within a threaded recess of a main part of each pivot lever 84.

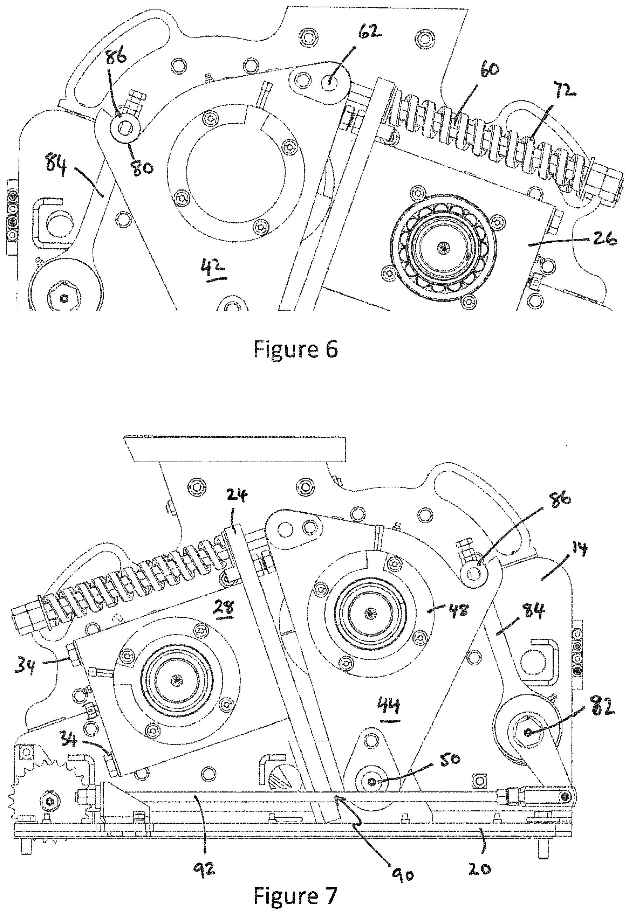

One end of the drive shaft 82 is connected to a drive 90 (see Figure 7) such that longitudinal movement of a first shaft 92 causes the drive shaft 82 to be rotated. This in turn causes the pins 86 to pull down on the recessed portions 80 of the corresponding first and second end elements 42,44 of the secondary frame and so rotate the secondary frame about the axle 50 and away from the adjacent posts 22,24. The drive 90 may be actuated in any convenient manner.

In this way separation of the first and second cracker rollers 30,32 can be controlled by operation of the drive 90 by an operator (for example by the operator entering a desired separation into a user interface located within a cab of the forage harvester 2 and an electronic control unit operating the drive to deliver the desired separation. The biasing element allows temporary widening of the gap between the first and second cracker rollers 30,32 to prevent overloading of the bearings in the event of an excessive flow of harvested crop or of the passage of a foreign object between the first and second cracker rollers 30,32.

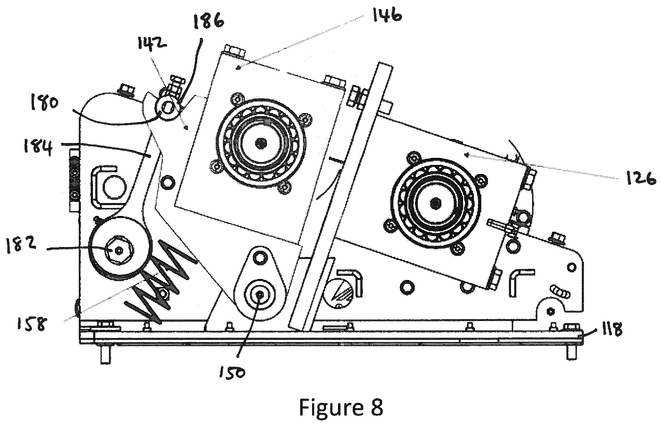

In a second embodiment, shown in Figure 8, the secondary frame again comprise first and second end elements 142 incorporating corresponding second mounting blocks 146. Like reference numerals are used to refer to like parts. The first and second end elements of the secondary frame are again connected by an axle 150 extending through a lower end of each of the first and second end elements. The axle 150 extends though suitable openings in the first and second side walls of the base frame. The axle 150 allows the first and second end elements of the secondary frame to pivot with respect to the base frame 110 about a central axis of the axle 150.

As in the first embodiment, an upper end of each of the first and second end elements of the secondary frame spaced from the posts is provided with a recessed portion 180 to be engaged by a suitable pin 186 on the associated pivot lever 184. The pivot levers 184 to each side of the cracker unit are mounted on shaft 182 and are provided with a drive as in the first embodiment.

However, in the second embodiment, the secondary housing is not provided with a biasing element acting between the secondary frame elements and the adjacent posts. Instead, a biasing arrangement 158 is arranged to each side of the cracker unit extending between the lower flange 118 and the secondary frame elements 142 mounted above the lower flanges 118.

Other elements of the cracker unit of the second embodiment correspond to those of the first embodiment.

As in the first embodiment, separation of the first and second cracker rollers 30,32 can be controlled by operation of the shaft 182 and the biasing arrangement 158 allows temporary widening of the gap between the first and second cracker rollers as required during operation of the cracker unit.

From reading the present disclosure, other modifications will be apparent to persons skilled in the art.

## Claims

1. A forage harvester cracker unit (6) comprising a base frame (10) comprising left and right hand side elements (12, 14), a first cracker roller (30) being mounted on the base frame (10) to be rotatable about a fixed central axis extending between the left and right hand side elements (12, 14) of the base frame (10) and a secondary frame comprising left and right hand side elements (42, 44), a second cracker roller (32) being mounted on the secondary frame to be rotatable about a central axis extending between the left and right hand side elements (42, 44) of the secondary frame, wherein the forage harvester cracker unit (6) further comprises a pivot axis extending through the base frame (10) and the secondary frame, the secondary frame being adjustable about the pivot axis to enable variation of a separation of the first and second cracker rollers (30, 32), a biasing element (58) acting between the base frame (10) and the secondary frame to urge the second cracker roller (32) towards the first cracker roller (30) and a drive element acting against the biasing element (58) to hold the secondary frame in position against the biasing element (58) to maintain a minimum separation of the first and second cracker rollers (30, 32) **characterised in that** the drive arrangement comprises includes a drive shaft (82) supported for rotation in bearings provided in the left and right hand side elements (12, 14) of the base frame (10), parallel levers (84) eccentrically mounted on the left and right hand sides of the drive shaft (82), a distal end of each lever (84) being retained within respective left and right hand side elements (42, 44) of the secondary frame so that rotation of the drive shaft (82) about its axis results in movement of the secondary frame with respect to the base frame (10) and the distance between the rolls (30, 32) to be varied; the drive arrangement further comprising an actuator (90) to control rotation of the drive shaft (82).

2. A forage harvester cracker unit (6) according to claim 1, **characterised in that** the biasing element (58) comprises parallel spring elements mounted on the base frame (10).

3. A forage harvester cracker unit (6) according to claim 2, **characterised in that** the spring elements act to pull the secondary frame towards the base frame (10).

4. A forage harvester cracker unit (6) according to claim 3, **characterised in that** the spring elements are mounted adjacent the first cracker roller (30).

5. A forage harvester cracker unit (6) according to claim 2, **characterised in that** the spring elements act to push the secondary frame towards the base frame (10).

6. A forage harvester cracker unit (6) according to claim 5, **characterised in that** the spring elements are mounted adjacent the second cracker roller (32).

7. A forage harvester cracker unit (6) according to any preceding claim, **characterised in that** each of the left and right hand side elements (42, 44) of the secondary frame are provided with recessed portions (80) to receive the distal end of each lever (84).

8. A forage harvester cracker unit (6) according to claim 7, **characterised in that** the distal end of each lever (84) is provided with a pin (86) to be received within the recessed portions (80) of each of the left and right hand side elements (42, 44) of the secondary frame.

## Patentansprüche

1. Quetscheinheit (6) für einen Feldhäcksler mit einem Grundrahmen (10) mit einem linken und einem rechten Seitenelement (12, 14), wobei eine erste Quetschwalze (30) drehbar um eine feste Mittelachse, die sich zwischen dem linken und dem rechten Seitenelement (12, 14) des Grundrahmens (10) erstreckt, an dem Grundrahmen (10) gelagert ist, und mit einem Sekundärrahmen mit einem linken und einem rechten Seitenelement (42, 44), wobei eine zweite Quetschwalze (32) drehbar um eine Mittelachse, die sich zwischen dem linken und dem rechten Seitenelement (42, 44) des Sekundärrahmens erstreckt, am Sekundärrahmen gelagert ist, wobei die Quetscheinheit (6) ferner eine Schwenkachse aufweist, die sich durch den Grundrahmen (10) und den Sekundärrahmen erstreckt, wobei der Sekundärrahmen um die Schwenkachse verstellbar ist, um einen Abstand zwischen der ersten und der zweiten Quetschwalze (30, 32) zu verändern, mit einem Beaufschlagungselement (58), welches zwischen dem Grundrahmen (10) und dem Sekundärrahmen wirkt, um die zweite Quetschwalze (32) in Richtung der ersten Quetschwalze (30) zu drücken, und mit einem Antriebselement, welches gegen das Beaufschlagungselement (58) wirkt, um den Sekundärrahmen in einer Position gegen das Beaufschlagungselement (58) zu halten, so dass ein Mindestabstand zwischen der ersten und der zweiten Quetschwalze (30, 32) aufrechterhalten wird, **dadurch gekennzeichnet, dass** die Antriebseinrichtung eine Antriebswelle (82) umfasst, die drehbar in Lagern, welche in dem linken und dem rechten Seitenelement (12, 14) des Grundrahmens (10) vorgesehen sind, gelagert ist, wobei parallele Hebel (84) exzentrisch an der linken und der rechten Seite der Antriebswelle (82) angebracht sind und ein distales Ende jedes Hebels (84) so in dem jeweiligen linken und rechten Seitenelement (42, 44) des Sekundärrahmens gehalten ist, dass eine Drehung der Antriebswelle (82) um ihre Achse eine Bewegung des Sekundärrahmens relativ zum Grundrahmen (10) bewirkt und den Abstand zwischen den Quetschwalzen (30, 32) verändert; wobei die Antriebseinrichtung ferner einen Aktuator (90) umfasst, um die Drehung der Antriebswelle (82) zu steuern.

2. Quetscheinheit (6) für einen Feldhäcksler nach Anspruch 1, **dadurch gekennzeichnet, dass** das Beaufschlagungselement (58) parallele Federelemente umfasst, die am Grundrahmen (10) angebracht sind.

3. Quetscheinheit (6) für einen Feldhäcksler nach Anspruch 2, **dadurch gekennzeichnet, dass** die Federelemente so wirken, dass sie den Sekundärrahmen in Richtung des Grundrahmens (10) ziehen.

4. Quetscheinheit (6) für einen Feldhäcksler nach Anspruch 3, **dadurch gekennzeichnet, dass** die Federelemente in der Nähe der ersten Quetschwalze (30) angeordnet sind.

5. Quetscheinheit (6) für einen Feldhäcksler nach Anspruch 2, **dadurch gekennzeichnet, dass** die Federelemente so wirken, dass sie den Sekundärrahmen in Richtung des Grundrahmens (10) drücken.

6. Quetscheinheit (6) für einen Feldhäcksler nach Anspruch 5, **dadurch gekennzeichnet, dass** die Federelemente in der Nähe der zweiten Quetschwalze (32) angeordnet sind.

7. Quetscheinheit (6) für einen Feldhäcksler nach einem der vorhergehenden Ansprüche, **dadurch gekennzeichnet, dass** das linke und rechte Seitenelement (42, 44) des Sekundärrahmens mit vertieften Bereichen (80) versehen sind, um das distale Ende des jeweiligen Hebels (84) aufzunehmen.

8. Quetscheinheit (6) für einen Feldhäcksler nach Anspruch 7, **dadurch gekennzeichnet, dass** die distalen Enden jedes Hebels (84) mit einem Pin oder Bolzen (86) versehen sind, der in dem vertieften Bereich (80) des linken und rechten Seitenelements (42, 44) des Sekundärrahmens aufgenommen werden kann.

## Revendications

1. Unité de concassage d'ensileuse (6) comprenant un châssis de base (10) comprenant des éléments latéraux gauche et droit (12, 14), un premier rouleau de concassage (30) étant monté sur le châssis de base (10) afin de pouvoir tourner autour d'un axe central fixe s'étendant entre les éléments latéraux gauche et droit (12, 14) du châssis de base (10) et un châssis secondaire comprenant des éléments latéraux gauche et droit (42, 44), un second rouleau de concassage (32) étant monté sur le châssis secondaire de manière à pouvoir tourner autour d'un axe central s'étendant entre les éléments latéraux gauche et droit (42, 44) du châssis secondaire, dans laquelle l'unité de concassage d'ensileuse (6) comprend, en outre, un axe de pivot s'étendant à travers le châssis de base (10) et le châssis secondaire, le châssis secondaire pouvant être réglé autour de l'axe de pivot afin de permettre la variation d'une séparation entre les premier et second rouleaux de concassage (30, 32), un élément d'application (58) agissant entre le châssis de base (10) et le châssis secondaire afin d'appliquer le second rouleau de concassage (32) vers le premier rouleau de concassage (30) et un élément d'entraînement agissant contre l'élément d'application (58) afin de retenir le châssis secondaire en position contre l'élément d'application (58) de manière à maintenir une séparation minimum entre les premier et second rouleaux de concassage (30, 32) **caractérisée en ce que** l'agencement d'entraînement comprend un arbre d'entraînement (82) supporté avec liberté de rotation dans des paliers agencés sur les éléments latéraux gauche et droit (12, 14) du châssis de base (10), des leviers parallèles (84) montés de manière excentrique sur les côtés latéraux gauche et droit de l'arbre d'entraînement (82), une extrémité distale de chaque levier (84) étant retenue à l'intérieur des éléments latéraux gauche et droit (42, 44) respectifs du châssis secondaire de telle sorte que la rotation de l'arbre d'entraînement (82) autour de son axe conduit à un mouvement du châssis secondaire par rapport au châssis de base(10) et la distance entre les roulements (30, 32) peut être modifiée ; l'agencement d'entraînement comprenant, en outre, un actionneur (90) afin de commander la rotation de l'arbre d'entraînement (82).

2. Unité de concassage d'ensileuse (6) selon la revendication 1, **caractérisée en ce que** l'élément d'application (58) comprend des éléments élastiques parallèles montés sur le châssis de base (10).

3. Unité de concassage d'ensileuse (6) selon la revendication 2, **caractérisée en ce que** les éléments élastiques agissent de manière à pousser le châssis secondaire vers le châssis de base (10).

4. Unité de concassage d'ensileuse (6) selon la revendication 3, **caractérisée en ce que** les éléments élastiques sont montés de manière adjacente au premier rouleau de concassage (30).

5. Unité de concassage d'ensileuse (6) selon la revendication 2, **caractérisée en ce que** les éléments élastiques agissent de manière à pousser le châssis secondaire vers le châssis de base (10).

6. Unité de concassage d'ensileuse (6) selon la revendication 5, **caractérisée en ce que** les éléments élastiques sont montés de manière adjacente au second rouleau de concassage (32).

7. Unité de concassage d'ensileuse (6) selon l'une quelconque des revendications précédentes, **caractérisée en ce que** chacun des éléments latéraux gauche et droit (42, 44) du châssis secondaire comporte des parties en cavité (80) destinée à recevoir l'extrémité distale de chaque levier (84).

8. Unité de concassage d'ensileuse (6) selon la revendication 7, **caractérisée en ce que** l'extrémité distale de chaque levier (84) comporte une broche (86) destinée à être reçue à l'intérieur des parties en cavité (80) de chacun des éléments latéraux gauche et droit (42, 44) du châssis secondaire.
